# EUROPÄISCHE PATENTANMELDUNG

(11) **EP 1 415 833 A2**
(43) Veröffentlichungstag der Anmeldung: **06.05.2004**
(21) Anmeldenummer: 03022902.5
(22) Anmeldetag: 09.10.2003
(51) Int. Cl.: B60J 1/20

(54) **Führungsschiene, insbesondere für ein Sonnenschutzrollo in einem Kraftfahrzeug**

(30) Priorität: 21.10.2002 DE 10248958
(71) Anmelder: ArvinMeritor GmbH, 63128 Dietzenbach (DE)
(72) Erfinder: Messerschmidt, Martin, 55128 Mainz (DE); Hattass, Rainer, 63584 Gründam 2 (DE)
(74) Vertreter: Sties, Jochen, Dipl.-Ing.

(57) **Zusammenfassung**

Eine Baugruppe bestehend aus mindestens einer Führungsschiene (10) und einem Schlitten (12), der in der Führungsschiene verschiebbar ist, insbesondere für ein Beschattungssystem wie ein Rolle oder einen Schiebehimmel für ein Kraftfahrzeug, wobei die Führungsschiene (10) mindestens eine Bremsnut (18) und der Schlitten (12) mindestens ein Bremselement (38) aufweist, das in die Bremsnut (18) eingreifen kann, um den Schlitten (12) in der Führungsschiene (10) zu arretieren, wobei der Schlitten (12) eine Drehachse (30) und ein von der Drehachse (30) beabstandetes Abstützelement (40) aufweist, das sich unter Federwirkung an der Führungsschiene (10) so abstützt, daß das Bremselement (38) in die Bremsnut (18) beaufschlagt wird.

## Beschreibung

Die Erfindung betrifft eine Baugruppe bestehend aus mindestens einer Führungsschiene und einem Schlitten, der in der Führungsschiene verschiebbar ist, insbesondere für ein Beschattungssystem wie ein Rollo oder einen Schiebehimmel für ein Kraftfahrzeug.

Der Schlitten soll in der Führungsschiene zum einen leicht verschiebbar sein, damit geringe Betätigungskräfte erforderlich sind, um das Rollo oder den Sonnenschutz nach vorne oder nach hinten zu schieben. Andererseits muß gewährleistet sein, daß der Schlitten in der Führungsschiene in der jeweils eingestellten oder gewünschten Position verbleibt, damit sich das Rollo oder der Sonnenschutz nicht unbeabsichtigt während der Fahrt des Fahrzeugs verstellen kann, insbesondere unter der Wirkung einer Rückzugsfeder, wie sie für Rollos verwendet wird.

Die Erfindung schafft eine Baugruppe, bei welcher beide Anforderungen erfüllt werden: zum einen ist der Schlitten besonders leicht in der Führungsschiene verschiebbar, und zum anderen wird er zuverlässig in seiner jeweiligen Stellung arretiert. Zu diesem Zweck ist erfindungsgemäß bei der Baugruppe vorgesehen, daß die Führungsschiene mindestens eine Bremsnut und der Schlitten mindestens ein Bremselement aufweist, das in die Bremsnut eingreifen kann, um den Schlitten in der Führungsschiene zu arretieren, wobei der Schlitten eine Drehachse und ein von der Achse beabstandetes Führungselement aufweist, daß sich unter Federwirkung an der Führungsschiene so abstützt, daß das Bremselement in die Bremsnut beaufschlagt wird. Der Schlitten wird, wenn das Rollo oder der Sonnenschutz nach vorne oder nach hinten verschoben wird, um die Drehachse gedreht, wodurch das Bremselement aus der Bremsnut herausgezogen wird. Dadurch ist der Schlitten leicht in der Führungsschiene verschiebbar. Sobald das Rollo oder der Sonnenschutz freigegeben wird, wird der Schlitten vom Abstützelement zurück in die Ausgangsstellung verschwenkt, in der das Bremselement in die Bremsnut hineingedrückt wird. Dadurch ist das Rollo oder der Sonnenschutz fest arretiert.

Das Abstützelement kann mittels einer Blattfeder mit dem Schlitten verbunden sein. Die Blattfeder erzeugt dann ein Drehmoment um die Drehachse des Schlittens, wodurch das Bremselement in die Bremsnut hineingedrückt wird.

Gemäß der bevorzugten Ausführungsform der Erfindung ist vorgesehen, daß das Abstützelement mittels eines elastisch federnden Armes einstückig mit dem Schlitten ausgebildet ist. Der besondere Vorteil dieser Ausführungsform besteht darin, daß der gesamte Schlitten einschließlich des Abstützelementes einstückig hergestellt werden kann, beispielsweise spritzgegossen. Durch die geeignete Auswahl der Geometrie des Armes, mittels dem das Abstützelement mit dem Körper des Schlittens verbunden ist, und der Eigenschaften des Materials des Schlittens ergeben sich die gewünschten Federeigenschaften von allein, ohne daß ein zusätzliches Bauelement verwendet werden muß.

Vorzugsweise ist vorgesehen, daß die Führungsschiene zwei nebeneinanderliegende Bremsnuten aufweist und der Schlitten mit zwei Bremselementen versehen ist, die gabelförmig in die beiden Bremsnuten eingreifen. Auf diese Weise erhöht sich die Bremswirkung der Bremselemente in der Führungsschiene.

Um die Bremswirkung noch weiter zu erhöhen, ist vorgesehen, daß die beiden Bremselemente, wenn sie in die Bremsnuten beaufschlagt werden, elastisch auseinandergedrückt werden.

Gemäß der bevorzugten Ausführungsform der Erfindung ist vorgesehen, daß die Drehachse sich aus der Führungsschiene heraus erstreckt. An der Drehachse kann dann in konstruktiv einfacher Weise ein Spriegel angebracht werden. An dem Spriegel kann das vordere Ende des Rollos oder des Sonnenschutzes angebracht sein. Ferner kann der Spriegel mit einem Griff versehen sein, mittels dem das Rollo oder der Sonnenschutz manuell verschoben wird.

Die Erfindung wird nachfolgend anhand einer bevorzugten Ausführungsform beschrieben, die in den beigefügten Zeichnungen dargestellt ist. In diesen zeigen:
- Figur 1 einen schematischen Längsschnitt durch eine Führungsschiene und einen in dieser angeordneten Schlitten;
- Figur 2 einen Schnitt entlang der Ebene II von Figur 1;
- Figur 3 einen Schnitt entlang der Ebene III von Figur 1;
- Figur 4 den Schlitten in einer Seitenansicht;
- Figur 5 den Schlitten in einer Draufsicht;
- Figur 6 den Schlitten in einer Vorderansicht;
- Figur 7 in einer Ansicht entsprechend derjenigen von Figur 1 den Schlitten in einem arretierten und einem gelösten Zustand;
- Figur 8 einen Schnitt entlang der Ebene VIII von Figur 7; und
- Figur 9 eine Variante zur Ausführungsform von Figur 1.

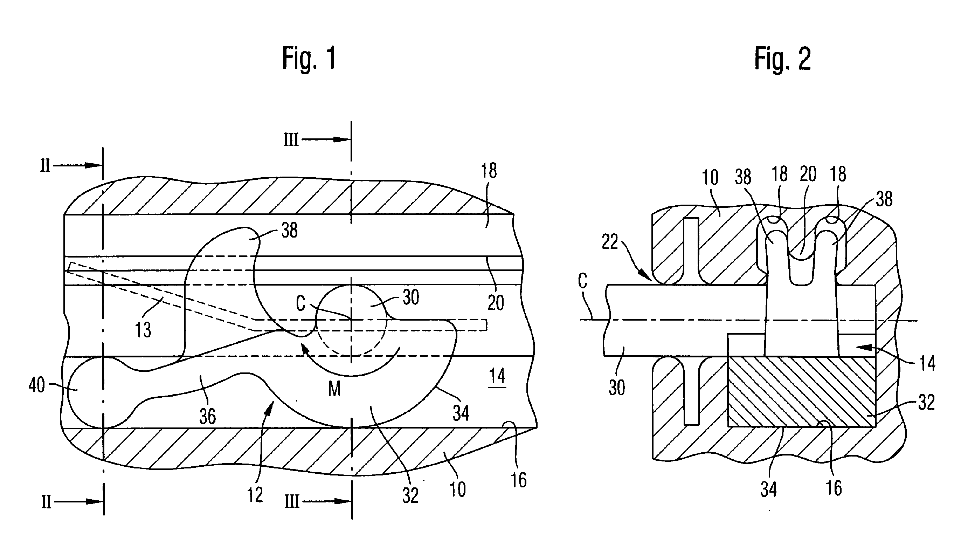

In den Figuren 1 bis 8 ist eine Führungsschiene 10 zu sehen, in der ein Schlitten 12 verschiebbar angeordnet ist. Die Führungsschiene 10 ist am Dach eines Fahrzeugs angebracht und verläuft etwa parallel zur Längsrichtung des Fahrzeugs. Es sind zwei einander gegenüberliegende Führungsschienen vorgesehen, die üblicherweise parallel zueinander verlaufen. Dementsprechend sind auch zwei einander gegenüberliegende Schlitten 12 vorgesehen. Diese sind miteinander durch einen Spriegel 13 verbunden, der somit quer zur Längsrichtung des Fahrzeugs verläuft. Mit dem Spriegel 13 ist ein Rollo oder Sonnenschutz verbunden, das unterhalb einer Dachöffnung angeordnet werden kann, die mit einem Deckel eines Schiebedachsystems verschließbar ist. Das Rollo ist an seinem bezüglich der Fahrrichtung des Fahrzeugs hinteren Ende in einem Gehäuse aufgenommen, aus dem es entgegen der Wirkung einer Rückzugsfeder nach vorne herausgezogen werden kann. Am vorderen Ende ist es durch den Spriegel 13 und die beiden Schlitten 12 fixiert. Die beiden Schlitten 12 dienen dazu, das Rollo zu führen und in jeder beliebigen Stellung in der Führungsschiene zu arretieren, so daß es von der Rückzugsfeder nicht unbeabsichtigt in das Gehäuse zurückgezogen wird.

Jede Führungsschiene 10 ist hier als Strangpreßprofilteil aus einer Aluminiumlegierung ausgeführt und weist einen holen Innenraum 14 auf, in welchem der Schlitten 12 angeordnet ist. Der Innenraum 14 wird an seiner bezüglich den Figuren 1 bis 8 unteren Seite durch eine Abstützfläche 16 begrenzt. Auf der der Abstützfläche 16 gegenüberliegenden Seite sind zwei Bremsnuten 18 vorgesehen, die durch eine Rippe 20 voneinander getrennt sind.

Auf der bezüglich den Figuren 2, 3 und 8 linken Seite ist die Führungsschiene 10 mit einem Durchtrittsschlitz 22 versehen, so daß der Innenraum 14 mit dem Außenraum der Führungsschiene 10 in Verbindung steht.

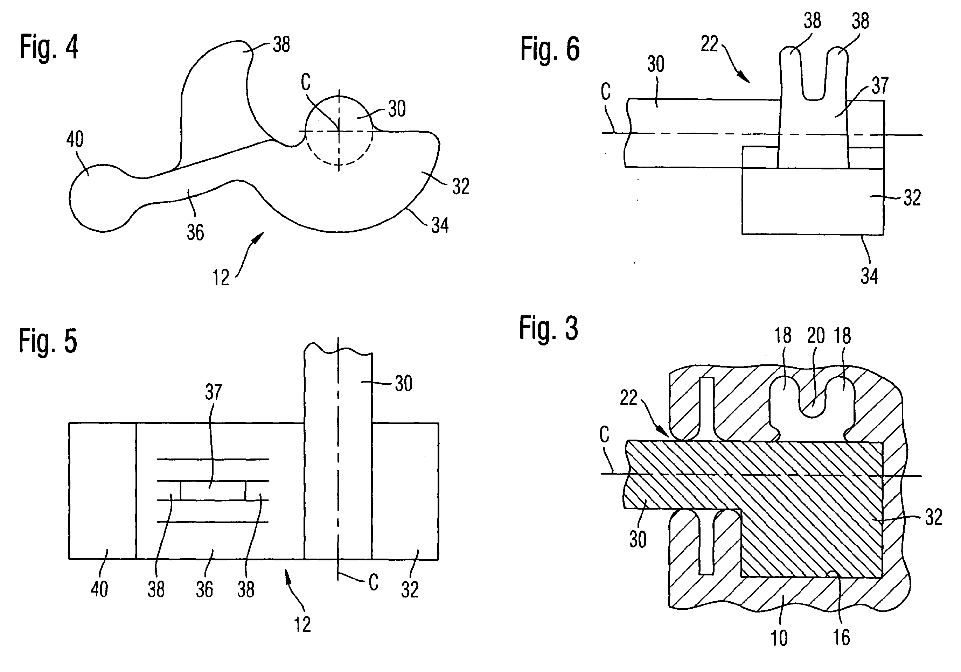

Der Schlitten 12 (siehe insbesondere die Figuren 4 bis 6) weist eine Drehachse 30 auf, die sich über die gesamte Breite des Schlitten 12 erstreckt. Mit der Drehachse 30 ist der Spriegel 13 fest verbunden. An die Drehachse 30 schließt sich ein Gleitabschnitt 32 an, dessen Außenfläche 34 konzentrisch mit der Mittelachse C der Drehachse 30 des Schlittens 12 ist. An den Gleitabschnitt 32 schließt sich einstückig ein Arm 36 an, der elastisch federnd ist. Auf der bezüglich Figur 4 oberen Seite des Armes 36 ist ein Sockelabschnitt 37 angeordnet, von dem ausgehend sich zwei Bremselemente 38 erstrecken. Die beiden Bremselemente 38 sind als gabelförmig nebeneinander liegende Vorsprünge (siehe insbesondere Figur 6) ausgebildet.

An das von der Drehachse 30 abgewandte Ende des Armes 36 schließt sich einstückig ein Abstützelement 40 an, das hier zylindrisch ausgebildet ist. Die Achse dieses Zylinders verläuft parallel zur Mittelachse C.

Der gesamte Schlitten 12 einschließlich des Armes 36, der Bremselemente 38 und des Abstützelementes 40 ist einstückig aus Kunststoff ausgeführt, und zwar vorzugsweise als Spritzgußteil aus POM.

Wenn der Schlitten 12 im Innenraum 14 der Führungsschiene 10 angeordnet ist, stützen sich die Außenfläche 34 des Gleitabschnittes 32 sowie das Abstützelement 40 an der Abstützfläche 16 der Führungsschiene 10 ab. Die Drehachse 30 erstreckt sich durch den Durchtrittsschlitz 22 aus der Führungsschiene 10 hinaus. Der Arm 36 ist so ausgebildet, daß er in dem in den Figuren 1 und 2 gezeigten Ausgangszustand, in welchem keine äußeren Kräfte auf den Schlitten einwirken, auf den Schlitten ein Drehmoment in der Richtung des Pfeils M um die Mittelachse C der Drehachse 30 ausübt. Dies wird dadurch erreicht, daß der Arm 36 das Abstützelement 40 bezüglich der Figur 1 nach unten zu verschieben sucht. Als Resultat des ausgeübten Drehmomentes werden die beiden Bremselemente 38 in die Bremsnuten 18 hineingedrückt, so daß sie beiderseits der Rippe 20 anliegen. Dabei werden die beiden Bremselemente 38 elastisch verformt, so daß hohe Reibungskräfte auftreten, die gewährleisten, daß der Schlitten 12 fest in der Führungsschiene 10 arretiert ist.

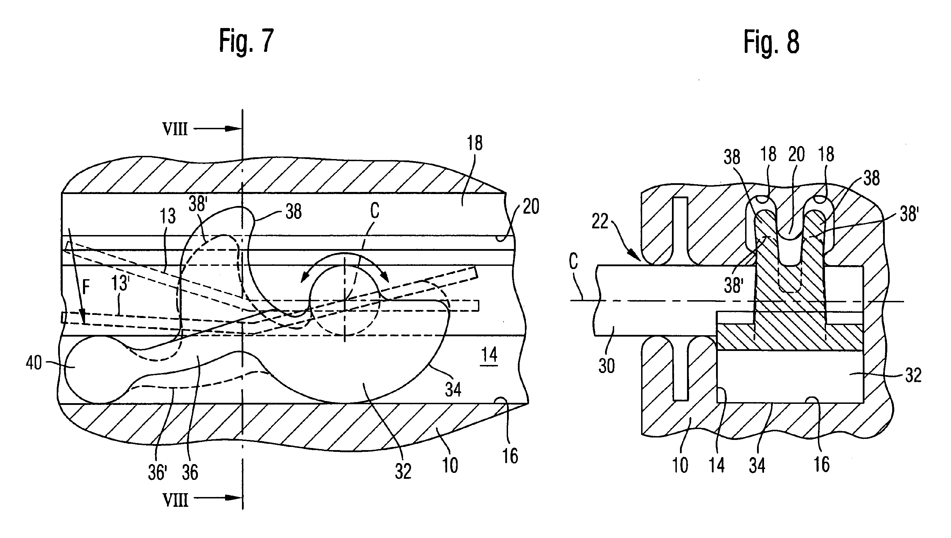

Wenn ein Benutzer den Spriegel 13 und damit das mit diesem verbundene Rollo oder den Sonnenschutz verstellen möchte, zieht er an einem (nicht dargestellten) Griff, der am Spriegel 13 angebracht ist und hier durch den Kraftangriffspunkt F angedeutet ist, wodurch der Spriegel 13 um die Mittelachse C der Drehachse 30 aus der in den Figuren 1 und 3 gepunktet eingezeichneten Stellung in die in Figur 7 gestrichelt gezeigte Stellung verschwenkt wird. Diese Schwenkbewegung wird über die Drehachse 30 auch auf den Gleitabschnitt 32 des Schlittens 12 übertragen, so daß der Gleitabschnitt 32 entgegen dem in der Richtung des Pfeils M wirkenden Drehmoment verschwenkt wird, also entgegen dem Uhrzeigersinn. Aufgrund der Schwenkbewegung des Gleitabschnittes 32 wird das bezüglich Figur 7 rechte Ende des Armes 36 nach unten bewegt, was dazu führt, daß der Arm 36 elastisch in die gestrichelte Position 36' vorgespannt wird. Gleichzeitig werden die beiden Bremselemente 38 bezüglich den Figuren 7 und 8 nach unten in die gestrichelt gezeigte Position 38' bewegt, in der sie nicht mehr in die beiden Bremsnuten 18 eingreifen. In dieser Stellung ist der Schlitten 12 frei in der Führungsschiene 10 verschiebbar, so daß das Rollo oder der Sonnenschutz vom Benutzer frei in eine neue Position verschoben werden kann. Sobald der Benutzer den Griff und somit den Spriegel 13 freigibt, werden der Schlitten 12 und der Spriegel 13 von der Federwirkung des Armes 36 wieder in die in Figur 1 gezeigte Stellung verschwenkt, in der die beiden Bremselemente 38 in die beiden Bremsnuten 18 eingreifen. Dadurch sind der Schlitten 12, der Spriegel 13 und das an diesem angebrachte Rollo bzw. der Sonnenschutz in der jeweiligen Position arretiert.

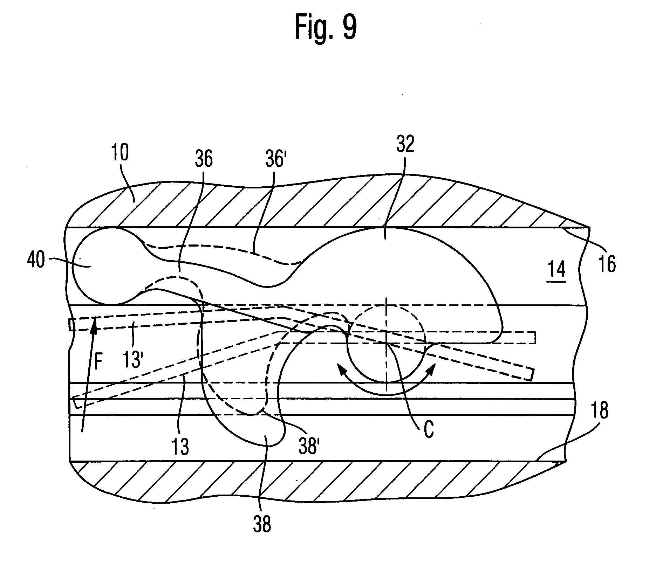

In Figur 9 ist eine Variante zu der in den Figuren 1 bis 8 gezeigten Ausführungsform dargestellt. Der einzige Unterschied besteht darin, daß die Anordnung der Abstützfläche 16 und der Bremsnuten 18 vertauscht ist. Im Ausgangszustand werden die beiden Bremselemente 38 nach unten in die beiden Bremsnuten 18 beaufschlagt. Zum Lösen des Schlittens 12 muß der Spriegel 13 in der Richtung des Pfeils F nach oben gedrückt werden. Sobald der Spriegel 13 wieder freigegeben wird, wird der Gleitabschnitt 32 vom elastisch vorgespannten Arm 36 entgegen dem Uhrzeigersinn verschwenkt, wodurch die beiden Bremselemente 38 wieder in die beiden Bremsnuten 18 eingreifen. Der Schlitten ist dann in der Führungsschiene arretiert.

## Patentansprüche

1. Baugruppe bestehend aus mindestens einer Führungsschiene (10) und einem Schlitten (12), der in der Führungsschiene verschiebbar ist, insbesondere für ein Beschattungssystem wie ein Rollo oder einen Schiebehimmel für ein Kraftfahrzeug, wobei die Führungsschiene (10) mindestens eine Bremsnut (18) und der Schlitten mindestens ein Bremselement (38) aufweist, das in die Bremsnut eingreifen kann, um den Schlitten in der Führungsschiene zu arretieren, wobei der Schlitten eine Drehachse (30) und ein von der Drehachse beabstandetes Abstützelement (40) aufweist, das sich unter Federwirkung an der Führungsschiene (10) so abstützt, daß das Bremselement (38) in die Bremsnut (18) beaufschlagt wird.

2. Baugruppe nach Anspruch 1, **dadurch gekennzeichnet, daß** das Abstützelement (40) mittels einer Blattfeder mit dem Schlitten verbunden ist.

3. Baugruppe nach Anspruch 1, **dadurch gekennzeichnet, daß** das Abstützelement (40) mittels eines elastisch federnden Armes (36) einstückig mit dem Schlitten ausgebildet ist.

4. Baugruppe nach einem der vorhergehenden Ansprüche, **dadurch gekennzeichnet, daß** die Führungsschiene (10) zwei nebeneinanderliegende Bremsnuten (18) aufweist und der Schlitten mit zwei Bremselementen (38) versehen ist, die gabelförmig in die beiden Bremsnuten eingreifen.

5. Baugruppe nach Anspruch 4, **dadurch gekennzeichnet, daß** die beiden Bremselemente (38), wenn sie in die Bremsnuten (18) beaufschlagt werden, elastisch auseinandergedrückt werden.

6. Baugruppe nach einem der vorhergehenden Ansprüche, **dadurch gekennzeichnet, daß** die Drehachse (30) sich aus der Führungsschiene (10) heraus erstreckt.

7. Baugruppe nach Anspruch 6, **dadurch gekennzeichnet, daß** an der Drehachse (30) ein Spriegel (13) angebracht ist.

8. Baugruppe nach Anspruch 7, **dadurch gekennzeichnet, daß** zwei einander gegenüberliegende Führungsschienen (10) vorgesehen sind, in denen jeweils ein Schlitten (12) angeordnet ist, und daß der Spriegel (13) sich zwischen den beiden Schlitten erstreckt.

9. Baugruppe nach Anspruch 8, **dadurch gekennzeichnet, daß** an dem Spriegel (13) ein Griff angebracht ist.
